(19) Europäisches Patentamt
European Patent Office
Office européen des brevets

(11) Veröffentlichungsnummer: **0 001 564**
**B1**

(12) # EUROPÄISCHE PATENTSCHRIFT

(45) Veröffentlichungstag der Patentschrift: **01.07.81**

(51) Int. Cl.³: **H 02 G 15/10**

(21) Anmeldenummer: **78100970.9**

(22) Anmeldetag: **22.09.78**

(54) **Kabelgarnitur für kunststoffisolierte Starkstromkabel.**

(30) Priorität: **13.10.77 DE 2746296**

(43) Veröffentlichungstag der Anmeldung:
**02.05.79 Patentblatt 79/9**

(45) Bekanntmachung des Hinweises auf die Patenterteilung:
**01.07.81 Patentblatt 81/26**

(84) Benannte Vertragsstaaten:
**DE FR GB SE**

(56) Entgegenhaltungen:
DE - A - 1 690 060
DE - A - 1 765 490
DE - A - 1 926 575
DE - A - 2 015 988
DE - A - 2 060 817
DE - A - 2 459 133
DE - A - 2 459 136
DE - B - 1 241 595
GB - A - 1 127 759
US - A - 3 258 522

(73) Patentinhaber: **SIEMENS AKTIENGESELLSCHAFT**
**Berlin und München**
**Postfach 22 02 61**
**D-8000 München 22 (DE)**

(72) Erfinder: **Kurda, Norbert**
**Haackzeile 7**
**D-1000 Berlin 20 (DE)**
Erfinder: **Schenck, Hans-Joachim Dipl.-Chem. Dr. phil.**
**Im Hornisgrund 9**
**D-1000 Berlin 19 (DE)**

**EP 0 001 564 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Kabelgarnitur für kunststoffisolierte Starkstromkabel

Die erfindung liegt auf dem Gebiet der Garnituren für kunststoffisolierte Starkstromkabel, insbesondere für mehradrige Niederspannungskabel, und zielt darauf ab, eine technisch hochwertige, aber kostengünstige Gießharzgarnitur zu schaffen.

Der Einsatz von thermoplastischen, thermoelastischen und elastomeren Kunststoffen für die Isolierung von Starkstromkabeln anstelle einer getränkten Papierisolierung hat auch zu neuen Bauformen auf dem Gebeit der Kabelgarnituren geführt. Dabei hat sich insbesondere der Einsatz von Gießharzgarnituren bewährt, bei deren Herstellung eine die Verbindungs- oder Abzweigstelle des Kabels oder das Kabelende umgebende Gießform mit einem aushärtbaren Gießharz gefüllt wird. Derartige Garnituren werden insbesondere für Starkstromkabel mit einer Isolierung aus Polyvinylchlorid, aber auch für Starkstromkabel mit einer Isolierung aus thermoplastischem oder vernetztem Polyäthylen eingesetzt. Bei diesen Kabeln können sich Schwierigkeiten dadurch ergeben, daß das Gießharz an der Kabelisolierung und/oder dem Kabelmantel nicht ausreichend haftet, so daß sich insbesondere bei wechselnder Belastung des Kabels zwischen der Isolierung und dem Gießharzkörper Spalte bilden, über die beispielsweise Feuchtigkeit in die Garnitur gelangen kann. Zur Überwindung dieser Schwierigkeiten sind an sich Lösungen bekannt, beispielsweise die Anwendung von haftvermittelnden Zwischenschichten oder eine Elastifizierung des Gießharzes (Fachprospekt "Kabelgarnituren für PROTOTHEN-X-Kabel 0,6/1 kV" der Siemens AG Nr. J 119/1083, DE—Z "Elektro-Jahr 1976", Seiten 171 bis 174). Spaltbildungen zwischen der Isolierung des Starkstromkabels und dem Gießharzkörper können auch bei anderen Isolierwerkstoffen auftreten, insbesondere dann, wenn die Starkstromkabel thermisch relativ hoch be lastet werden. Zu diesen Isolierwerkstoffen zählen die Polyolefine wie beispielsweise Polypropylen, Gemische aus Polypropylen und Polyäthylen, Copolymere des Äthylens und des Propylens, thermoplastisches und vernetztes Polyäthylen, chlorsulfoniertes Polyäthylen, Polychloropren, Silikonkautschuk, natürliche und synthetische Kautschuke.

Für kunststoffisolierte Starkstromkabel im Niederspannungsbereich sind Verbindungsmuffen bekannt, die eine mechanisch stabile äußere Schutzschicht sowie auf der Innenseite dieser Schutzschicht eine kompressible Schicht aufweisen und die mit einer zunächst gießfähigen, anschließend in einen gummielastischen oder plastischen Zustand übergehenden Isoliermasse gefüllt werden; bei derartigen Verbindungsmuffen fängt die kompressible Schicht betriebsbedingte Wärmedehnungen der Kabelisolierung und der Isoliermasse selbst auf DE—OS 24 59 133). Weiterhin ist es bekannt, für Verbindungsmuffen an kunststoffisolierten Nachrichtenkabeln ein längsgeteiltes Kunststoffgehäuse zu verwenden, das mit einer plastisch bleibenden Füllmasse gefüllt wird (DE—GM 70 47 255).

Es ist auch bekannt, die zur Herstellung von Verbindungsoder Abzweigmuffen an Starkstromkabeln verwendeten Gießharze mit Füllstoffen anzureichern, beispielsweise ein mit Sand gefülltes, gegebenenfalls flexibilisiertes Epoxidharz (DE—AS 14 90 251) oder ein mit Kunststoffgranulat gefülltes, aufschäumbares Epoxid- oder Polyurethanharz zu verwenden (DE—OS 20 60 817). Aufschäumbare Gießharze, die nach dem Aufschäumen zu einer festen Schaumstoffmasse erstarren, können auch ohne besondere Füllstoffe zur Herstellung von Kabelgarnituren verwendet werden (DE—OS 16 90 389) Gegebenenfalls kann speziell die Leiterverbindungsstelle mit einer fettartigen Isoliermasse umgeben sein, wobei diese innere Isolierschicht in ihrer Wandstärke geringer ist als die Wandstärke der umgebenden Schaumstoffmasse (CH—PS 570 722, US—PS 3 895 180).

Schließlich ist es zur Herstellung von Garnituren an Hochspannungskabeln bekannt, in ein Garniturengehäuse eine flüssige oder pastöse Masse auf Silikonbasis einzufüllen, die anschließend in einen gelartigen Zustand übergeht (GB—PS 1 127 759).

Die Erfindung geht von der US—PS 3 895 180 aus und berücksichtigt, daß die bekannten Kabelgarnituren für kunststoffisolierte Starkstromkabel, insbesondere für mehradrige Niederspannungskabel, entweder kostenungünstig sind, weil beispielsweise für den Gießharzkörper als Ganzes ein hochwertiges Gießharz verwendet wird oder weil besondere Muffengehäuse notwendig sind, oder daß die bekannten Kabelgarnituren unter Berücksichtigung der gestiegenen technischen Anforderungen nicht hinreichend betriebssicher sind, weil Belastungsschwankungen unter Einschluß hoher Betriebstemperaturen zu Spaltbildungen zwischen dem Gießharzkörper und den angrenzenden Teilen der Kabelgarnitur führen.

Der Erfindung liegt daher die Aufgabe zugrunde, für kunststoffisolierte Starkstromkabel, insbesondere für mehradrige Niederspannungskabel, eine technisch hochwertige, aber hinsichtlich der eingesetzten Werkstoffe und des Montageaufwandes möglichst kostengünstige Kabelgarnitur zu schaffen.

Zur Lösung dieser Aufgabe geht die Erfindung von einer Kabelgarnitur aus, bei der das abgesetzte Kabelende oder die abgesetzten Kabelenden bzw. der entsprechend zubereitete Kabelabschnitt von einer zweischichtigen isolierenden Umhüllung umgeben sind, deren

innere Schicht aus einem weichelastischen Kunststoff und deren äußere, mechanisch stabile Schicht aus einer aufgeschäumten oder nicht geschäumten und ausgehärteten, vor dem Aushärten gießfähigen Kunststoffmasse auf Epoxid- oder Polyurethanbasis besteht, wobei die Wandstärke bzw. die mittlere Wandstärke der inneren Schicht kleiner als die Wandstärke bzw. die mittlere Wandstärke der äußeren Schicht ist. Gemäß der Erfindung ist vorgesehen, daß die innere, wärmebeständige, an den Kabeladern und den Verbindungselementen fest haftende Schicht aus einem Silikongel besteht, dessen Shore-Härte A weniger als 5 und dessen Nadelpenetrationswert mehr als 250 mm/10 beträgt und das mittels nur ca. 0,2 bis 0,5 Gewichts-% Silan vernetzt ist, und daß die äußere Schicht als zweiteilige Gießform für die innere Schicht ausgebildet und stark mit Füllstoffen angereichert ist.

Bei einer derart ausgebildeten Kabelgarnitur ist deren kritischer Bereich, also beispielsweise die Verbindungs-, Abzweig- oder Anschlußstelle der Kabeladern, einschließlich der zunächst nicht isolierten spannungsführenden Teile von einer elektrisch hochwertigen Isolierschicht umgeben, die aufgrund ihrer weichelastischen Eigenschaften und ihrer guten Haftfähigkeit auch bei hohen Betriebstemperaturen an den spannungsführenden Teilen und den anschleißenden Isolierungen der Kabeladern sowie gegebenenfalls dem Kabelmantel gut haftet und eine gegenüber Feuchtigkeit dichte Schicht bildet. Diese weichelastische innere Schicht ist von einer äußeren Schicht umgeben, die überwiegend eine mechanische Stützfunktion hat und deren elektrische Eigenschaften die Betriebssicherheit der Kabelgarnitur weniger als die innere Schicht oder gar nicht beeinflussen. Eine derart aufgebaute Kabelgarnitur zeichnet sich demnach durch gute elektrische Eigenschaften, Feuchtigkeitsbeständigkeit, leichte Montierbarkeit und geringe Kosten aus.

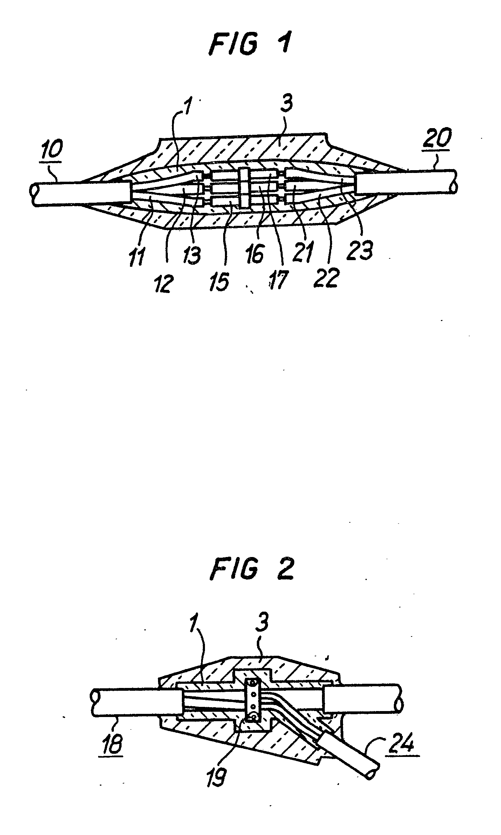

Ausführungsbeispiele der neuen Kabelgarnitur sind in den Figuren 1 und 2 dargestellt.

Fig. 1 zeigt in überwiegend schematischer Darstellung eine Verbindungsmuffe für zwei kunststoffisolierte mehradrige Starkstromkabel 10 und 20, deren Kabeladern 11, 12, 13 und 21, 22, 23 über die Preßhülsen 15, 16, 17 miteinander verbunden sind. Die Verbindung der vierten Kabelader ist nicht dargestellt. Die Verbindungsstelle der beiden Kabel 10 und 20 ist von einer isolierenden Umhüllumg umgeben, die in eine innere Schicht 1 und eine äußere Schicht 3 unterteilt ist. Die innere Schicht 1, deren Wandstärke bzw. deren mittlere Wandstärke kleiner als die Wandstärke bzw. die mittlere Wandstärke der äußeren Schicht 3 ist, besteht aus einem weichelastischen, wärmebeständigen Silikongel auf der Basis eines Polydimethylsiloxans mit der Strukturformel

$$CH_2{=}CH{-}\underset{(CH_3)_2}{\underset{\|}{Si}}{-}(O{-}\underset{(CH_3)_2}{\underset{\|}{Si}})_n{-}O{-}\underset{(CH_3)_2}{\underset{\|}{Si}}{-}CH{=}CH_2,$$

dessen Shore-Härte A kleiner als 5 ist und dessen Nadelpenetrationswert mehr als 250 mm/10 beträgt und mit nur 0,3 Gewichts-% Silan als Vernetzer und ca. 2 Gewichts-% eines Platinkatalysators (mit ca. 20 ppm Pt) vernetzt ist. Die Viskosität des unvernetzten Gemisches beträgt etwa 600 cP. Das Gemisch wird um die Verbindungsstelle der Kabelenden herum mittels einer zweiteiligen Gießform 3 angeordnet, die aus einem Polyurethanharz besteht, dem zur Streckung Sand oder Kunststoffe- bzw. Gummiabfälle beigegeben sind. Der Anteil des Füllstoffes liegt zweckmäßig über 40 % und beträgt vorzugsweise 50 bis 70 % Anstelle einer stark gefüllten Gießharzmasse auf Polyurethanbasis kommen auch ebensolche Gießharzmassen auf Epoxidharzbasis in Betracht. Auch können Gemische aus Bitumen und Polyurethanharzen oder Epoxidharzen eingesetzt werden. Die jeweils eingesetzten Kunststoffmassen werden durch geeignete Raktionen zum Härten gebracht. Weiterhin können für die äußere Schicht der isolierenden Umhüllung auch aufgeschäumte bzw. aufschäumbare Gießharze, beispielsweise auf der Basis von gefülltem Polyurethanharz oder von gefülltem Epoxidharz, eingesetzt werden, wozu insbesondere Gießharze geeignet sind, wie sie in der DE—AS 24 59 136 beschrieben sind und die gegebenenfalls mit Füllstoffen besser wärmeleitend gemacht sind.

Nach der Vernetzung des Gemisches ist das Silikongel 1 infolge des geringen Vernetzergehaltes äußerst flexibel. Die Haftfähigkeit des Silikongels kann, sofern erforderlich, durch Zugabe von Silikonöl wie beispielsweise Dimethylsiloxan erhöht werden.

Bei der in Fig. 2 dargestellten Kabelgarnitur handelt es sich um eine Abzweigmuffe, wie sie beispielsweise für Hausanschlüsse verwendet wird. Innerhalb der Muffe sind die Adern des abzweigenden, kunststoffisolierten Niederspannungskabels 24 über die Kompaktklemme 19 mit den Adern des durchlaufenden, im Bereich der Abzweigmuffe vom Kabelmantel befreiten Niederspannungskabels 18 verbunden. Die gesamte Verbindungsstelle ist von der inneren Isolierschicht 1 aus einem Silikongel umgeben. Das Silikongel befindet sich in der zweiteiligen Gießform 3. Diese Gießform besteht aus einem geschäumten Gießharz auf Polyurethanharz- oder Epoxidharzbasis mit geeigneten Zusätzen zur Erhöhung der Wärmeleitfähigkeit.

Die beschriebene neue Garniturenkonstruktion kann auch für Muffen zum Übergang von Kabeln mit imprägnierter Papierisolierung (Massekabel) auf kunststoffisolierte Kabel verwendet werden, sofern die Aderenden des Massekabels durch geeignete Maßnahmen gegenüber der inneren, weichelastischen Schicht der isolierenden Umhüllung abgedichtet sind.

## Patentanspruch

1. Kabelgarnitur für kunststoffisolierte Starkstromkabel, insbesondere für mehradrige Niederspannungskabel, bei der das abgesetzte Kabelende oder die abgesetzten Kabelenden bzw. der entsprechend zubereitete Kabelabschnitt von einer zweischichtigen isolierenden Umhüllumg umgeben sind, deren innere Schicht aus einem weichelastischen Kunststoff und deren äußere, mechanisch stabile Schicht aus einer aufgeschäumten oder nicht geschäumten und ausgehärteten, vor dem Aushärten gießfähigen Kunststoffmasse auf Epoxid- oder Polyurethanbasis besteht, wobei die Wandstärke bzw. die mittlere Wandstärke der inneren Schicht kleiner als die Wandstärke bzw. die mittlere Wandstärke der äußeren Schicht ist, dadurch gekennzeichnet, daß die innere, wärmebeständige, an den Kabeladern und den Verbindungselementen fest haftende Schicht aus einem Silikongel (1) besteht, dessen Shore-Härte A weniger als 5 und dessen Nadelpenetrationswert mehr als 250 mm/10 beträgt und das mittels nur ca. 0,2 bis 0,5 Gewichts-% Silan vernetzt ist, und daß die äußere Schicht (3) als zweiteilige Gießform für die innere Schicht ausgebildet und stark mit Füllstoffen angereichert ist.

## Claim

1. Cable fitting for synthetic resin-insulated heavy current cables, in particular for multiconductor low-voltage cables, wherein the setup cable end or ends, or the correspondingly prepared cable section, is or are surrounded by a two-layer insulating covering, the inner layer of which consists of a soft-elastic synthetic resin and the outer, mechanically-stable layer of which consists of a foamed or unfoamed, hardened synthetic resin material mass having an epoxide or polyurethane basis, and which can be poured before curing, and wherein the wall thickness or the average wall thickness of the inner layer is less than the wall thickness or the average wall thickness of the outer layer, characterised in that the inner, heat-resistant layer which adheres tightly to the cable conductors and the connection elements, consists of a silicon gel (1) whose Shore A-hardness is less than 5 and whose needle penetration value is more than 250 mm/10 and which is cross-linked by means of only about 0.2 to 0.5 % by weight of silane, and that the outer layer (3) is formed as a two-part casting mould for the inner layer and is highly enriched with fillers.

## Revendication

1. Accessoire pour des câbles à courant fort isolés au plastique, en particulier pour des câbles multiconducteurs à basse tension, dans lesquels la ou les extrémitiés étagées du câble et la section de câble préparée façon correspondante sont entourées par une enveloppe isolante à deux couches, dont la couch intérieure est constituée en une matière plastique à élasticité douce et dont la couche extérieure, stable du point de vue mécanique, est constituée par une masse de matière plastique expansée ou non expansée en mousse et durcie, apte á la coulée avant le durcissement, l'épaisseur ou l'épaisseur moyenne de la couche intérieure étant inférieure à l'épaisseur ou l'épaisseur moyenne de la couche extérieure, caractérisé par le fait que la couche intérieure thermorésistante, adhérant bien aux conducteurs du câble et aux éléments de raccordement, est constituée par un gel de silicone (1) dont la dureté Shore A est inférieure á 5 et dont la valuer de pénétrabilité à l'aiguille est supérieure à 250 mm/10 et qui est réticulée à l'aide de seulement environ 0,2 à 0,5 % en poids de silane, et que la couche extérieure (3) est réalisée sous la forme d'un moule en deux éléments pour la couch intérieure et est fortement enrichie par des matières de remplissage.

FIG 1

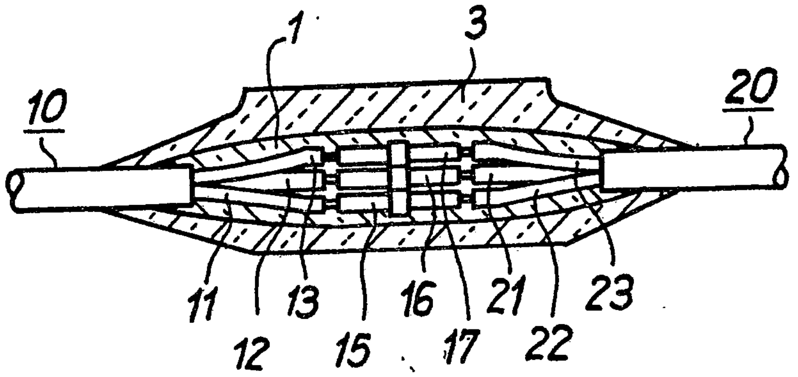


FIG 2